# EUROPÄISCHE PATENTANMELDUNG

(11) **EP 4 101 647 A1**
(43) Veröffentlichungstag der Anmeldung: **14.12.2022**
(21) Anmeldenummer: 21178985.4
(22) Anmeldetag: 11.06.2021
(51) Int. Cl.: B41F 33/00, B65H 43/08, B65H 43/04, G03B 15/16, G06T 7/00

(54) **VERFAHREN ZUM DIGITALDRUCK AUF EINER LAUFENDEN BEDRUCKSTOFFBAHN**

(71) Anmelder: BST GmbH, 33729 Bielefeld (DE)
(72) Erfinder: LOHMEIER, Christian, 33729 Bielefeld (DE)
(74) Vertreter: Ter Meer Steinmeister & Partner

(57) **Zusammenfassung**

Verfahren zum Digitaldruck auf einer laufenden Bedruckstoffbahn (10), bei dem sich wiederholende Motive (a, b, c) fortlaufend auf die Bahn gedruckt werden und mit einer Kamera fortlaufend Bilder der gedruckten Motive aufgenommen und auf einem Display (14) zur Bahnbeobachtung als stehende Bilder (α, β, γ) wiedergegeben werden, dadurch gekennzeichnet, dass die Motive in mehreren Spuren (A, B, C) nebeneinander und mit einem sich von Spur zu Spur ändernden Repeat auf die Bahn gedruckt werden und dass die Bilder für die Bahnbeobachtung spurweise und synchron mit dem für die jeweilige Spur geltenden Repeat aufgenommen werden.

## Beschreibung

Die Erfindung betrifft ein Verfahren zum Digitaldruck auf einer laufenden Bedruckstoffbahn, bei dem sich wiederholende Motive fortlaufend auf die Bahn gedruckt werden und mit einer Kamera fortlaufend Bilder der gedruckten Motive aufgenommen und auf einem Display zur Bahnbeobachtung als stehende Bilder wiedergegeben werden.

Digitaldruckverfahren unterscheiden sich von analogen, auf Rotationsdruckmaschinen ausgeführten Druckverfahren im Grunde nur dadurch, dass zum Drucken der Motive anstelle eines rotierenden Druckzylinders ein digitales Druckwerk, beispielsweise ein Tintenstrahldrucker verwendet wird. In beiden Fällen erlaubt es die Bahnbeobachtung, die Qualität der gedruckten Bilder schon während des Druckprozesses zu überwachen, so dass etwa auftretende Fehler frühzeitig erkannt werden können und dann entweder umgehend behoben werden oder aber zu einem Abbruch des Druckprozesses führen, so dass die Erzeugung größerer Mengen von Makulatur vermieden wird.

Die Bahnbeobachtungskamera ist so mit dem Repeat der gedruckten Motive synchronisiert, dass man auf dem Display nach dem Stroboskop-Prinzip ein stehendes Bild erhält, das jedoch jeweils das Aussehen der aktuell gedruckten Motive wiedergibt.

Aufgabe der Erfindung ist es, ein Digitaldruckverfahren mit Bahnbeobachtung anzugeben, das eine höhere Flexibilität hinsichtlich der Organisation des Druckprozesses ermöglicht.

Diese Aufgabe wird erfindungsgemäß dadurch gelöst, dass die Motive in mehreren Spuren nebeneinander und mit einem sich von Spur zu Spur ändernden Repeat auf die Bahn gedruckt werden und dass die Bilder für die Bahnbeobachtung spurweise und synchron mit dem für die jeweilige Spur geltenden Repeat aufgenommen werden.

Das Verfahren erlaubt es, die gedruckten Motive so auf der Bahn anzuordnen, dass eine weitgehend vollständige Flächenfüllung erreicht wird und somit der Verbrauch an Bahnmaterial minimiert wird. Dadurch, dass die Kamera oder mehrere Kameras für die Bahnbeobachtung spurweise mit dem Repeat synchronisiert werden, lassen sich stehende Bilder der Motive in jeder Spur erreichen.

Vorteilhafte Ausgestaltungen und Weiterbildungen der Erfindung sind in den Unteransprüchen angegeben.

In einer Ausführungsform kann für jede der mehreren Spuren eine eigene Kamera, beispielsweise eine Matrixkamera vorgesehen sein, die mit dem Repeat in der jeweiligen Spur synchronisiert ist. In dem Fall können die Motive aus mehreren oder allen Spuren gleichzeitig als stehende Bilder auf einem Display wiedergegeben werden.

Das Verfahren ist jedoch auch in Anlagen ausführbar, in denen zur Bahnbeobachtung nur eine einzige Kamera vorhanden ist, die traversierend über die Breite der Bahn bewegbar ist. In dem Fall können die verschiedenen Spuren auf der Bahn nacheinander beobachtet werden. Bei einem Wechsel der Kamera von einer Spur zur anderen wird die Synchronisation an den geänderten Repeat angepasst.

Neben Systemen zur Bahnbeobachtung sind auch sogenannte Inspektionssysteme bekannt, mit denen nach Abschluss des Druckprozesses die Qualität des Druckerzeugnisses überprüft werden kann. Dazu wird die bedruckte Bahn auf ganzer Breite beispielsweise mit einer Zeilenkamera abgetastet. Aus EP 2 407 309 B1 ist ein integriertes Bahnbeobachtungs- und Inspektionssystem bekannt.

In der europäischen Patentanmeldung 21 151 278.5 wird ein Inspektionssystem vorgeschlagen, bei dem die Bilddaten der Zeilenkamera schon bei laufender Produktion aufgezeichnet und in der Form eines komprimierten Videoprotokolls gespeichert werden. Wenn ein solches Inspektionssystem zur Verfügung steht, können die Bilddaten für die Bahnbeobachtung auch mit einem spurweise einstellbaren Zeittakt aus dem von der Zeilenkamera gelieferten Datenstrom abgezweigt werden.

Gegenstand der Erfindung ist auch ein Bahnbeobachtungssystem, mit dem das hier vorgeschlagene Verfahren an einer digitalen Druckmaschine ausführbar ist.

Im folgenden werden Ausführungsbeispiele der Erfindung anhand der Zeichnung näher erläutert.

Es zeigen:
- Fig. 1: eine schematische Darstellung eines Abschnitts einer bedruckten Bedruckstoffbahn zusammen mit Bildern, die auf einem Display für die Bahnbeobachtung wiedergegeben werden;
- Fig. 2: eine Prinzipskizze einer digitalen Druckmaschine mit einem Bahnbeobachtungssystem;
- Fig. 3: eine Ansicht von Teilen der Druckmaschine aus der in Fig. 2 durch Pfeile III-III angegebenen Richtung;
- Fig. 4: eine Prinzipskizze einer Druckmaschine mit einem Bahnbeobachtungssystem gemäß einer anderen Ausführungsform; und
- Fig. 5: eine schematisierte Darstellung des Bahnbeobachtungssystems nach Fig. 4.

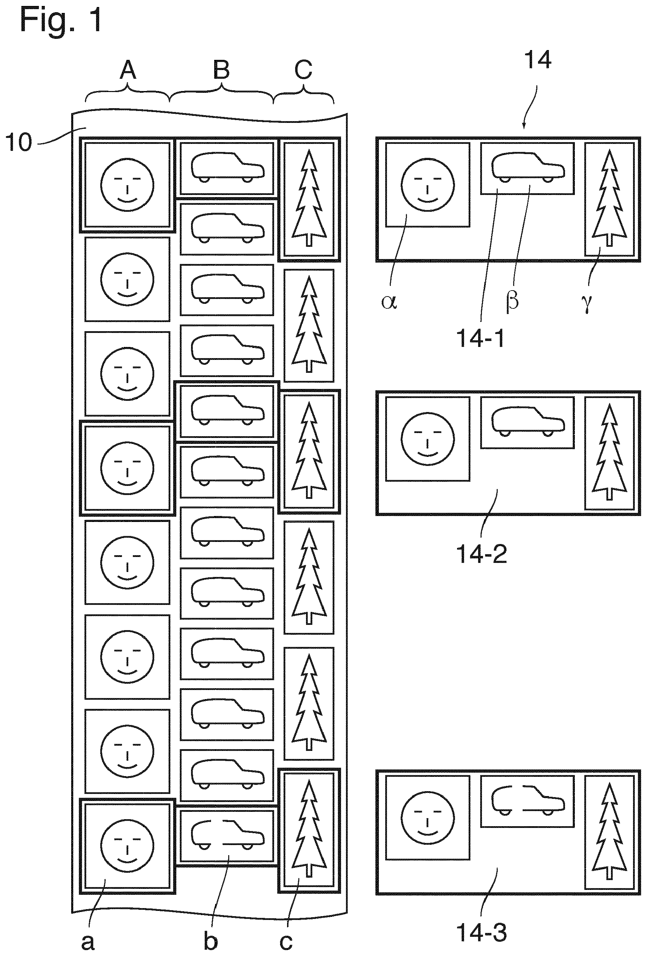

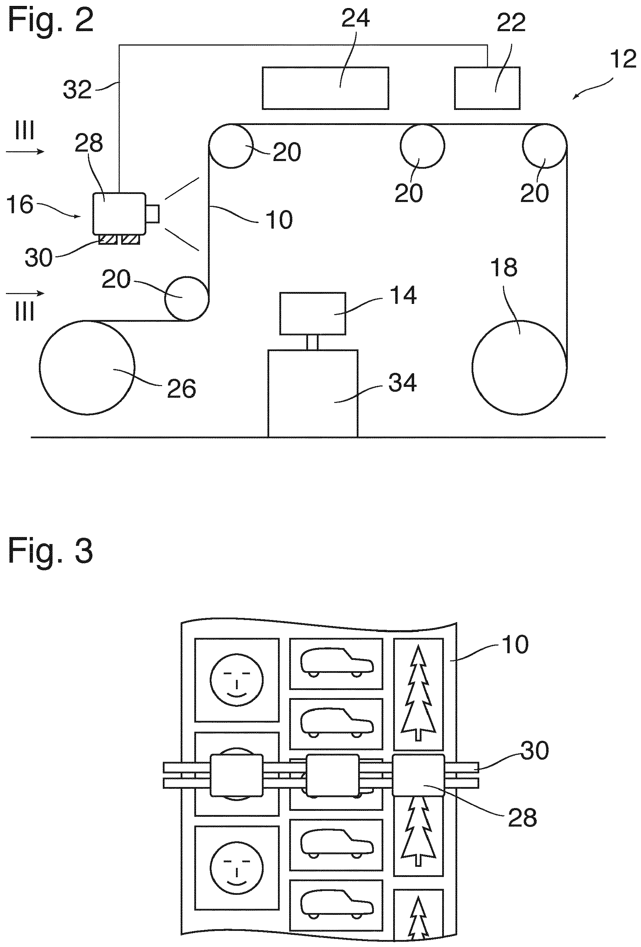

In Fig. 1 ist schematisch ein Abschnitt einer Bedruckstoffbahn 10 gezeigt, die in einer digitalen Druckmaschine 12 (Fig. 2) in drei parallelen Spuren A, B, C mit Motiven a, b, c bedruckt wurde. Daneben sind Anzeigeinhalte 14-1, 14-2 und 14-3 eines Displays 14 zu drei unterschiedlichen Zeitpunkten dargestellt. Zu jedem Zeitpunkt zeigt das Display 14 stehende Bilder α, β, y der drei Motive a, b, c, die etwa zeitgleich und somit annähernd auf gleicher Höhe auf die Bedruckstoffbahn 10 gedruckt wurden.

In Fig. 2 sind die digitale Druckmaschine 12 und ein zugehöriges Bahnbeobachtungssystem 16 stark vereinfacht dargestellt. Die Bedruckstoffbahn 10 wird von einer Rolle 18 abgezogen, über Leitrollen 20 an einem digitalen Druckwerk 22 und einer Trocknungsstation 24 vorbeigeführt und schließlich zu einem Wickel 26 aufgewickelt. Im digitalen Druckwerk 22, beispielsweise einem Tintenstrahldruckwerk, werden die Motive a, b, c auf die Bedruckstoffbahn gedruckt. Danach werden die gedruckten Bilder in der Trocknungsstation 24 getrocknet.

Das Bahnbeobachtungssystem 16 umfasst in diesem Beispiel ein Kamerasystem mit drei Matrixkameras 28, je eine für jede der Spuren A, B, C, die an einem vertikal verlaufenden Abschnitt der Bedruckstoffbahn 10 angeordnet und in der Richtung quer zur Bahn auf Schienen 30 verfahrbar sind. Die Matrixkameras 28 sind jeweils über eine Synchronisationsleitung 32 mit dem Druckwerk 22 verbunden und erhalten vom Druckwerk jedes Mal, wenn in der zu der Kamera gehörenden Spur der Druck eines Motivs beginnt, ein Synchronisationssignal. Nach einer einstellbaren Verzögerungszeit wird dann in der zugehörigen Matrixkamera ein Lichtblitz ausgelöst und ein Bild eines Ausschnitts der Bedruckstoffbahn 10 aufgenommen, der ein komplettes Motiv a, b oder c einschließt. Die so erhaltenen stehenden Bilder α, β, y werden dann in einem Leitstand 34 der Druckmaschine auf dem Display 14 wiedergegeben.

Fig. 3 zeigt einen Abschnitt der Bedruckstoffbahn 10, der dem Bahnbeobachtungssystem 16 gegenüberliegt, und lässt die Anordnung der Matrixkameras 28 auf den Schienen 30 erkennen. Die Breite der Spuren A, B, C kann je nach Druckauftrag variieren, und die Positionen der Kameras 28 auf den Schienen 30 werden so eingestellt, dass jede Kamera auf die Mitte der zugehörigen Spur zentriert ist.

Wie am deutlichsten in Fig. 1 zu erkennen ist, haben die Motive a, b, c sowohl in Breitenrichtung der Bedruckstoffbahn 10 als auch in deren Längsrichtung unterschiedliche Abmessungen, und in jeder Spur werden die Motive mit einem Repeat auf die Bedruckstoffbahn gedruckt, der an die Abmessung des betreffenden Motivs in Längsrichtung der Bahn angepasst ist. Dadurch wird erreicht, dass die Motive die Fläche der Bedruckstoffbahn 10 nahezu vollständig ausfüllen, so dass der Verbrauch an Bedruckstoffmaterial minimiert wird.

In der Praxis wird es, beispielsweise beim Verpackungsdruck, häufig so sein, dass von jedem der verschiedenen Motive die gleiche Anzahl von Drucken benötigt wird. In dem hier gezeigten Beispiel würde das bedeuten, dass die Spur B gegen Ende des Drucklaufes leer bleiben würde, weil die benötigte Anzahl der Motive b bereits erreicht ist. Mit dem digitalen Druckwerk 22 ist es jedoch möglich, die Aufteilung der Spuren und die Anordnung der Motive im laufenden Druckprozess zu ändern, so dass dann die freie mittlere Spur zum Drucken der benötigen Kopien des Motivs c genutzt werden kann, wodurch nicht nur der Materialverbrauch, sondern auch die Dauer des Drucklaufes minimiert wird.

Die von Spur zu Spur unterschiedlichen Repeats haben jedoch zur Folge, dass die Anordnung der auf die Bedruckstoffbahn gedruckten Motive relativ zueinander variiert. In Fig. 1 sind für jeden der drei Anzeigeinhalte 14-1, 14-2 und 14-3 diejenigen Motive fett umrandet, die zu dem betreffenden Zeitpunkt von den Matrixkameras 28 aufgenommen wurden. Man erkennt, dass die Anordnung der Motive relativ zueinander zeitlich nicht stabil ist. Da jedoch die Matrixkameras 28 spurweise mit dem für die jeweilige Spur geltenden Repeat synchronisiert sind, werden diese Positionsabweichungen bei der Wiedergabe der stehenden Bilder α, β und y ausgeglichen, so dass diese Bilder auf dem Bildschirm stets in der gleichen relativen Position erscheinen, so dass die Bilder aller drei Motive "stehen" und keines dieser Bilder auf dem Bildschirm durchläuft. Das ermöglicht es, die Qualität aller drei Motive in Echtzeit zu begutachten und etwaige Fehler unverzüglich festzustellen. Im gezeigten Beispiel ist bei dem Anzeigeinhalt 14-3 zu erkennen, dass in der Spur B einige Düsen des Tintenstrahldruckwerks ausgefallen sind und deshalb das Motiv b nicht vollständig gedruckt wird. In einem solchen Fall müsste, falls der Fehler nicht umgehend behoben werden kann, der Druckprozess abgebrochen werden.

Die spurweise Synchronisation der Zeilenkameras 28 hat allerdings zur Folge, dass die stehenden Bilder α, β, y mit unterschiedlichen Bildwiederholraten aktualisiert werden. Falls bei sehr kurzen Motiven und sehr hoher Druckgeschwindigkeit die Bildwiederholrate zu groß wird, ist es beispielsweise möglich, die Bildwiederholrate zu halbieren, indem in der betreffenden Spur nur jedes zweite Motiv aufgenommen wird.

Es ist nicht zwingend, dass zu jedem Zeitpunkt jedes der drei Motive vollständig beobachtet wird. Wenn die Matrixkameras eine Zoomfunktion haben, ist es beispielsweise möglich, stärker in ein Motiv einzuzoomen um besonders kritische Stellen des Motivs genauer zu beobachten. Die Zoom-Einstellung jeder Matrixkamera kann vom Leitstand 34 aus bei laufender Produktion variiert werden. Ebenso ist es möglich, für jede Kamera die Verzögerungszeit zwischen dem über die Synchronisationsleitung 32 empfangenen Synchronisationssignal und dem Zeitpunkt der Aufnahme des nächsten Bildes zu variieren. Dadurch lässt sich die vertikale Position des stehenden Bildes auf dem Display 14 nach Bedarf einstellen, so dass beispielsweise bei starker Vergrößerung des Bildes derjenige Bildausschnitt auf dem Display 14 dargestellt wird, den man näher untersuchen möchte.

Wenn die Matrixkameras 28 jeweils einen eigenen Antrieb haben, mit dem die Position auf den Schienen 30 verstellbar ist, so kann auch die laterale Position der Kamera bei laufendem Betrieb verändert werden, so dass man bei starkem Zoom den auf dem Display wiedergegebenen Bildausschnitt auch in Breitenrichtung verschieben kann.

Wenn es nicht erforderlich ist, sämtliche Motive ständig zu beobachten, lässt sich das hier beschriebene Verfahren auch mit nur einer einzigen traversierbaren Kamera ausführen, die dann zu verschiedenen Zeiten auf verschiedene Spuren eingestellt wird, wobei im Fall eines Spurwechsels automatisch auf das zu der neuen Spur gehörende Synchronisationssignal umgeschaltet wird.

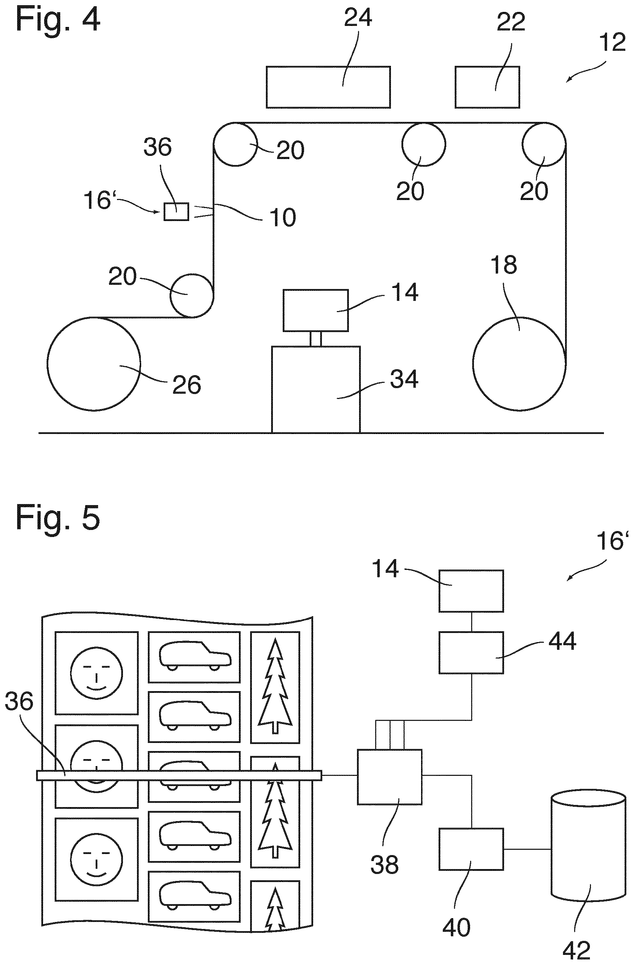

Fig. 4 und 5 zeigen, in Darstellungen analog zu Fig. 3 und 4, ein Bahnbeobachtungssystem 16' gemäß einem anderen Ausführungsbeispiel. In diesem Fall wird zur Bahnbeobachtung eine Zeilenkamera 36 eingesetzt, die sich über die gesamte Breite der Bedruckstoffbahn 10 erstreckt und zu jedem Zeitpunkt eine Pixelzeile der gesamten Bedruckstoffbahn aufnimmt. Die Zeilenkamera 36 liefert somit einen Bilddatenstrom, der die bedruckte Bahn auf ganzer Länge abbildet und beispielsweise auch für eine Bahninspektion genutzt werden kann, um nach Abschluss des Druckprozesses fehlerhafte Stellen aus der bedruckten Bahn herauszutrennen. Als "Zeilenkamera" im Sinne dieser Beschreibung und der Ansprüche gelten auch Sensoren mit vergleichbare Funktion wie z.B. CIS-Sensoren oder Matrixkameras mit nur wenigen auszulesenden Zeilen.

In Fig. 5 werden die Zeile für Zeile von der Zeilenkamera 36 gelieferten Bilddaten zunächst in einem Zwischenspeicher 38 gepuffert. Beispielsweise hat der Zwischenspeicher 38 eine Kapazität, die der Anzahl der Pixelzeilen des Motivs c mit dem längsten Repeat entspricht. Ein Kompressionsmodul 40 liest die Daten aus dem Zwischenspeicher 38 und führt einen Kompressionsalgorithmus aus, mit dem der Datenumfang beträchtlich reduziert wird. Beispielsweise kann die Kompression darauf beruhen, dass nicht die komplette Bildinformation jedes gedruckten Motivs gespeichert wird, sondern lediglich die Veränderung im Vergleich zum vorherigen Motiv. Die so komprimierten Daten werden in einem Massenspeicher 42 gespeichert und stehen dann für eine Bahninspektion zur Verfügung.

Der Zwischenspeicher 38 ist in eine Anzahl von Speicherblöcken aufgeteilt, die den Spuren A, B und C entsprechen. In jedem dieser Blöcke sind die Pixelzeilen einzeln adressierbar. Ein Lesemodul 44 empfängt die Synchronisationssignale vom Druckwerk 22 und berechnet daraus für jede Spur die Adresse der Pixelzeile, bei der das zuletzt aufgenommene Bild des Motivs beginnt. Auf diese Weise werden die Bilddaten virtuell spurweise synchronisiert, so dass sie auf dem Display 14 als stehende Bilder wiedergegeben werden können.

## Patentansprüche

1. Verfahren zum Digitaldruck auf einer laufenden Bedruckstoffbahn (10), bei dem sich wiederholende Motive (a, b, c) fortlaufend auf die Bahn gedruckt werden und mit einer Kamera (28; 36) fortlaufend Bilder der gedruckten Motive aufgenommen und auf einem Display (14) zur Bahnbeobachtung als stehende Bilder (α, β, γ) wiedergegeben werden, **dadurch gekennzeichnet, dass** die Motive in mehreren Spuren (A, B, C) nebeneinander und mit einem sich von Spur zu Spur ändernden Repeat auf die Bahn gedruckt werden und dass die Bilder für die Bahnbeobachtung spurweise und synchron mit dem für die jeweilige Spur geltenden Repeat aufgenommen werden.

2. Verfahren nach Anspruch 1, bei dem die Bilder für die Bahnbeobachtung mit mindestens einer Matrixkamera (28) aufgenommen werden.

3. Verfahren nach Anspruch 2, bei dem für jede Spur (A, B, C) eine gesonderte Matrixkamera vorgesehen ist, die mit dem für diese Spur geltenden Repeat synchronisiert ist.

4. Verfahren nach Anspruch 2, bei dem die Matrixkamera (28) traversierend über die Breite der Druckstoffbahn (10) bewegt wird und, wenn sich die Kamera von einer Spur zur anderen bewegt, die Synchronisation auf den Repeat für die neue Spur umgeschaltet wird.

5. Verfahren nach Anspruch 1, bei dem die Bilder für die Bahnbeobachtung mit einer Zeilenkamera (36) aufgenommen werden und die Bilddaten für die stehenden Bilder (α, β, γ) spurweise und synchron mit dem jeweiligen Repeat aus dem von der Zeilenkamera gelieferten Bilddatenstrom abgezweigt werden.

6. Verfahren nach Anspruch 5, bei dem die von der Zeilenkamera (36) gelieferten Bilddaten in einem Zwischenspeicher (38) gepuffert und dann komprimiert werden, und bei dem der Zwischenspeicher (38) in einzeln adressierbare Speicherblöcke aufgeteilt ist, die jeweils einer Spur (A, B, C) auf der Bedruckstoffbahn entsprechen, und die Bilddaten für die stehenden Bilder (α, β, γ) spurweise aus dem Zwischenspeicher (38) gelesen werden.

7. Bahnbeobachtungssystem (16; 16') für eine digitale Druckmaschine (12) zur Durchführung des Verfahrens nach einem der vorstehenden Ansprüche, **gekennzeichnet durch** mindestens eine Kamera (28; 36) zur Aufnahme von Bildern der Motive (a, b, c), die in den verschiedenen Spuren (A, B, C) auf die Bedruckstoffbahn (10) gedruckt wurden, und eine Synchronisationseinrichtung (32) zur spurweisen Synchronisation der mindestens einen Kamera mit dem Repeat der gedruckten Motive.
